# EUROPEAN PATENT SPECIFICATION

(11) **EP 3 446 962 B1**
(45) Date of publication and mention of the grant of the patent: **25.09.2024**
(21) Application number: 18189255.5
(22) Date of filing: 16.08.2018
(51) Int. Cl.: B64C 1/16, B64C 11/00, B64C 11/30, B64C 21/06, B64D 27/20, B64D 27/24, B64D 29/04, B64D 27/02

(54) **AIRCRAFT PROPULSION SYSTEM AND METHOD**
FLUGZEUGANTRIEBSSYSTEM UND -VERFAHREN
SYSTÈME ET PROCÉDÉ DE PROPULSION D'AÉRONEF

(30) Priority: 22.08.2017 US 201715682862
(43) Date of publication of application: 27.02.2019
(73) Proprietor: General Electric Company, Schenectady, NY 12345 (US)
(72) Inventor: PASTOUCHENKO, Nikolai N., Nikayuna, NY 12309-1027 (US); YAO, Jixian, Niskayuna, NY 12309 (US); JOSHI, Narendra Digamber, Niskayuna, NY 12309 (US)
(74) Representative: Openshaw & Co.

(56) References cited:
- EP-A1- 3 093 235
- EP-A1- 3 144 226
- EP-A2- 2 581 308
- EP-A2- 2 730 501
- US-A1- 2008 121 756

## Description

The subject matter described herein relates to propulsion systems of aircrafts.

### BACKGROUND

A conventional commercial aircraft generally includes a fuselage, a pair of wings, and a propulsion system that provides thrust to the aircraft. The propulsion system typically includes at least two aircraft engines, such as turbofan jet engines. Each turbofan jet engine is mounted to a respective wing of the aircraft, such as in a suspended position beneath the wing, separated from the wing and the fuselage. Such a configuration allows for the turbofan jet engines to interact with separate, freestream airflows that are not impacted by the wings and/or fuselage. This configuration can reduce an amount of turbulence within the air entering an inlet of each respective turbofan jet engine, which has a positive effect on a net propulsive thrust of the aircraft.

Drag on the aircraft, including the turbofan jet engines, has an effect on the net propulsion thrust of the aircraft. A total amount of drag on the aircraft, including skin friction and form drag, is generally proportional to a difference between a freestream velocity of air approaching the aircraft and an average velocity of a wake downstream from the aircraft that is produced due to the drag on the aircraft. Systems have been proposed to counter the effects of drag and/or to improve an efficiency of the turbofan jet engines. For example, certain propulsion systems include boundary layer ingestion systems to route a portion of relatively slow-moving air forming a boundary layer across the fuselage and/or the wings, into the turbofan jet engines upstream from a fan section of the turbofan jet engines. This configuration may reenergize the boundary layer airflow downstream from the aircraft that has a nonuniform or distorted velocity profile.

One issue with known aircraft propulsion systems is generating and providing reverse thrust to the aircraft in order to reduce the speed of movement of the aircraft. For example, when the aircraft is landing, the aircraft is moving at high speeds which puts strain on the braking system of the aircraft. Conventional thrust reverser systems that assist the braking system in slowing or stopping the aircraft include heavy equipment thereby adding weight to the aircraft and reducing the fuel efficiency of the system. Therefore, an improved system may provide improved fuel efficiency, improve propulsive efficiency, thereby reducing operating and maintenance costs, and improve the life of the aircraft.

EP3093235 (A1) discloses an aircraft comprising trailing edge flaps, a wing mounted propulsor positioned such that the flaps are located in a slipstream of the first propulsor in use when deployed. The aircraft further comprises a thrust vectorable propulsor configured to selectively vary the exhaust efflux vector of the propulsor in at least one plane.

EP2581308 (A2) a method and apparatus for controlling power distribution in an electrical aircraft propulsive system having at least one electrical propulsion unit which includes a plurality of rotatable blades, each blade having an adjustable pitch; a pitch adjusting mechanism for adjusting the pitch of the blades; at least one electrical machine electrically connected to the electrical propulsion unit so as to provide electrical power when in use; and, a control system.

EP3144226 (A1) a propulsion system for an aircraft having an aft engine configured to be mounted to the aircraft at an aft end of the aircraft.

### BRIEF DESCRIPTION

An aircraft propulsion system according to claim 1 is provided.

Further, a method according to claim 10 is provided.

### BRIEF DESCRIPTION OF THE DRAWINGS

The present inventive subject matter will be better understood from reading the following description of non-limiting embodiments, with reference to the attached drawings, wherein below:
Figure 1 illustrates a top view of an aircraft system in accordance with one embodiment;
Figure 2 illustrates a side view of the aircraft system of Figure 1 in accordance with one embodiment;
Figure 3 illustrates a cross-sectional perspective view of a boundary layer ingestion (BLI) fan system;
Figure 4A illustrates a partial perspective view of the BLI fan system of Figure 3 having blades positioned at a first pitch angle in accordance with one embodiment;
Figure 4B illustrates a partial front view of the BLI fan system of Figure 3 having blades positioned at a first pitch angle in accordance with one embodiment;
Figure 4C illustrates a side view of the BLI fan system of Figures 4A and 4B;
Figure 5A illustrates a partial perspective view of the BLI fan system of Figure 3 having blades positioned at a second pitch angle in accordance with one embodiment;
Figure 5B illustrates a partial front view of the BLI fan system of Figure 3 having blades positioned at a second pitch angle in accordance with one embodiment;
Figure 5C illustrates a side view of the BLI fan system of Figures 5A and 5B in accordance with one embodiment; and
Figure 6 illustrates a method flowchart.

### DETAILED DESCRIPTION

One or more embodiments of the inventive subject matter described herein relates to systems and methods that effectively provide thrust to an aircraft propulsion system. The systems and methods change a direction of rotation of a fan of a boundary layer ingestion (BLI) fan system. The systems and methods change a position of blades of the fan with an electric motor. By changing the direction of the rotation of the fan of the BLI fan system, and changing the position of the blades of the BLI fan system, the systems and methods change a direction of airflow through the BLI fan system. The change in the direction of airflow of the BLI fan system enables the BLI fan system to provide forward thrust as well as reverse thrust to the aircraft propulsion system. One technical effect of the subject matter described herein is managing the desired amount and direction of thrust that may be provided by the BLI fan system to the aircraft system. One technical effect of the subject matter described herein is improved reduction of speed of the aircraft system (e.g., slows more quickly) when the aircraft system is landing, decelerating, or the like, thereby extending part life of a braking system of the aircraft.

As used herein, the terms "first", "second", or "third" may be used interchangeably to distinguish one component from another and are not intended to signify location or importance of the individual components. The terms "forward" and "aft" refer to the relative positions of a component based on an actual or anticipated direction of travel. For example, "forward" may refer to a front of an aircraft based on an anticipated direction of travel of the aircraft, and "aft" may refer to a back of the aircraft based on an anticipated direction of travel of the aircraft. Additionally, the terms "upstream" and "downstream" refer to the relative direction with respect to fluid flow in a fluid pathway. For example, "upstream refers to the direction from which the fluid flows, and "downstream" refers to the direction to which the fluid flows.

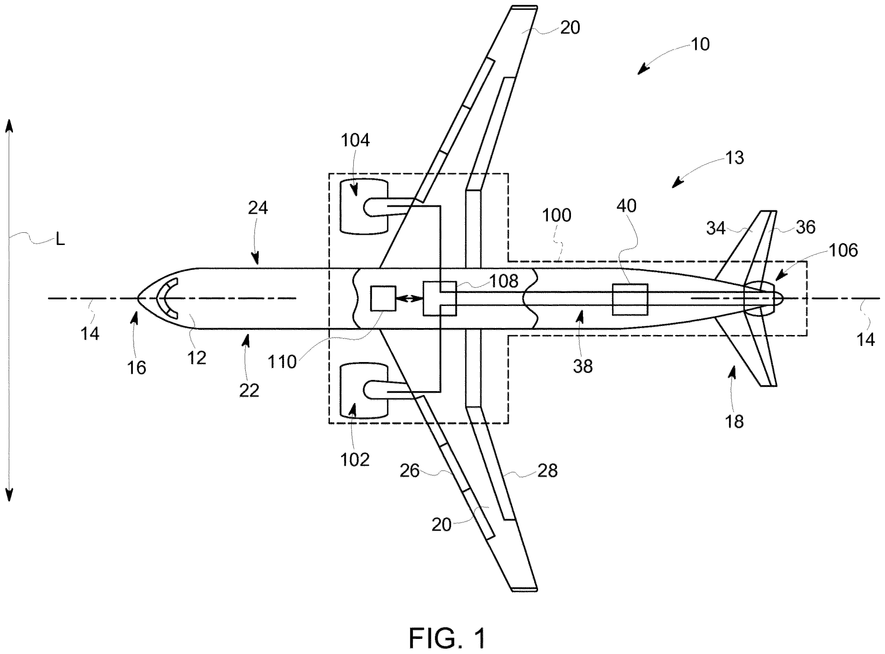

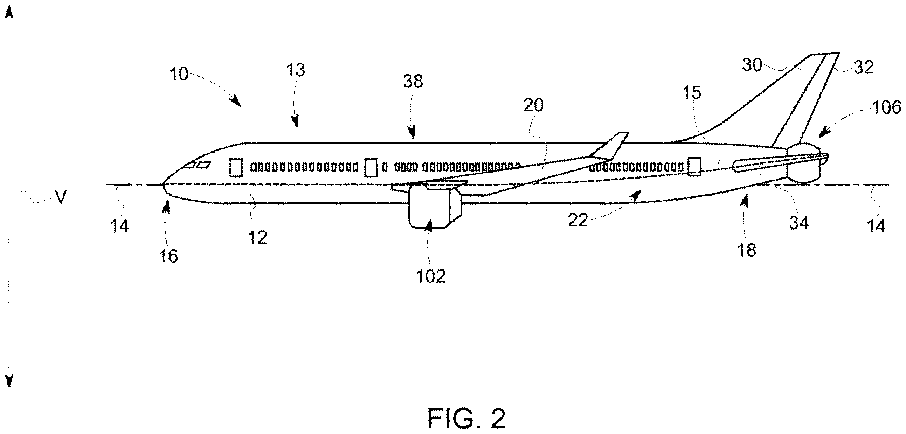

Figure 1 illustrates a top view of an aircraft system 10 in accordance with one embodiment. Figure 2 illustrates a side view of the aircraft system 10 in accordance with one embodiment. Figures 1 and 2 will be discussed together in detail herein.

The aircraft system 10 includes an aircraft 13 having a fuselage 12 that extends between a forward end 16 and an aft end 18 of the aircraft 13 along a longitudinal direction of the aircraft 13. The aircraft 13 defines a longitudinal centerline 14 that extends therethrough a vertical direction V and a lateral direction L. The aircraft 13 defines a mean line 15 that extends between the forward end 16 and the aft end 18 of the fuselage 12. As used herein, the term "fuselage" generally includes all of the body of the aircraft 13, such as an empennage of the aircraft 13. Additionally, as used herein, the "mean line" refers to a midpoint line extending along a length of the aircraft 13, not taking into account the appendages of the aircraft system 10 (e.g., wings 20 and stabilizers that will be discussed in more detail below).

The aircraft 13 includes a pair of wings 20. A first wing extends laterally from a port side 22 of the fuselage 12 in the lateral direction L, and a second wing extends laterally from a starboard side 24 of the fuselage 12. Each of the wings 20 includes one or more leading edge flaps 26 and one or more trailing edge flaps 28. Optionally, the wings 20 may not include the leading edge flaps 26 and/or the trailing edge flaps 28. The aircraft 13 includes a vertical stabilizer 30 and a pair of horizontal stabilizers 34 at the aft end 18 of the aircraft 13. The vertical stabilizer 30 has a rudder flap 32 for yaw control, and each of horizontal stabilizers 34 has an elevator flap 36 for pitch control of the aircraft system 10. The fuselage 12 includes an outer surface or skin 38. Figures 1 and 2 illustrate one embodiment of the aircraft system 10. Optionally, the aircraft system 10 may include any alternative configuration of stabilizers, wings, or the like, that may extend from the aircraft 13 along the vertical direction V, the horizontal or lateral direction L, or in any alternative direction away from the centerline 14 and/or the mean line 15.

The aircraft system 10 includes an aircraft propulsion system 100. The aircraft propulsion system 100 includes a pair of aircraft engines, at least one mounted to each of the pair of wings 20, and an aft engine. In the illustrated embodiment, the aircraft propulsion system 100 engines maybe configured as turbofan jet engines 102, 104 that are suspended beneath the wings 20 in an under-wing configuration. Additionally or alternatively, the jet engines 102, 104 may be positioned at a different location between the forward and aft ends 16, 18 of the aircraft 13, may be positioned above the wings 20, or at any alternative location. Optionally, the aircraft propulsion system 100 may include any number and/or configuration of jet engines including non-limiting examples of turbofans, turboprops, turbojets, or the like. For example, the aircraft propulsion system 100 may not include underwing mounted jet engines 102, 104, and may include any alternative power source (e.g., an electric power source) for powering the aircraft system 10.

The aft engine is a fan that is configured to ingest and consume air forming a boundary layer over the fuselage 12 of the aircraft 13. The aft engine may be referred to herein as a boundary layer ingestion (BLI) fan system 106. The BLI fan system 106 is mounted to the fuselage 12 at a location aft of the wings 20 and/or the jet engines 102, 104, such that the mean line 15 extends through the BLI fan system 106. For example, such a configuration positions a center axis of the BLI fan system 106 above the centerline 14 in the vertical direction V. Additionally, the BLI fan system 106 maybe mounted parallel to the centerline 14 in the lateral direction L, or at an angle to the centerline 14. For example, the center axis of the BLI fan system 106 may define an angle with the centerline 14. The BLI fan system 106 is fixedly connected to the fuselage 12 at the aft end 18 such that the BLI fan system 106 is incorporated into or blended with a tail section of the aircraft system 10 at the aft end 18. Optionally, the BLI fan system 106 may be positioned in any alternative locations near the aft end 18 of the aircraft 13.

The jet engines 102, 104 are configured to provide power to an electric generator 108 and/or an energy storage device 110 of the aircraft propulsion system 100. For example, one or more of the jet engines 102, 104 may be configured to provide mechanical power from a rotating shaft (e.g., a low-pressure shaft or high-pressure shaft) to the electric generator 108. In the illustrated embodiment, the jet engines 102, 104 are operably coupled with a single electric generator 108. Optionally, the jet engines 102, 104 may be operably coupled with two or more electric generators. The electric generator 108 may convert the rotational energy generated by the jet engines 102, 104 into electrical energy. Additionally or alternatively, the electric generator 108 may convert the mechanical power to electrical power and provide the converted electrical power to the energy storage device 110.

The aircraft propulsion system 100 includes an electric motor 40 operably coupled with the BLI fan system 106. For example, the electric motor 40 may electrically control one or more operation of the BLI fan system 106. Optionally, the electric motor 40 may be operably coupled with one or more components of the BLI fan system 106. Additionally, the electric generator 108 and/or the energy storage device 110 are electrically coupled with the electric motor 40. For example, the electric generator 108 may provide converted electrical power to the electric motor 40. The electric motor 40 may control operation of the BLI fan system 106 using the electrical power generated by the electric generator 108 and supplied to the electric motor 40.

In the illustrated embodiment, the electric generator 108, the energy storage device 110, and the electric motor 40 are separated from the jet engines 102, 104. Additionally or alternatively, one or more of the electric generator 108, energy storage device 110, or the electric motor 40 may be configured with the jet engines 102, 104. Optionally, the aircraft propulsion system 100 may include plural electric generators 108. Each electric generator 108 may be operably coupled with each of the jet engines 102, 104. Optionally, one or more of the jet engines 102, 104 may be a high bypass, turbofan jet engine with an electric generator driven by one or more shafts of the turbofan jet engine.

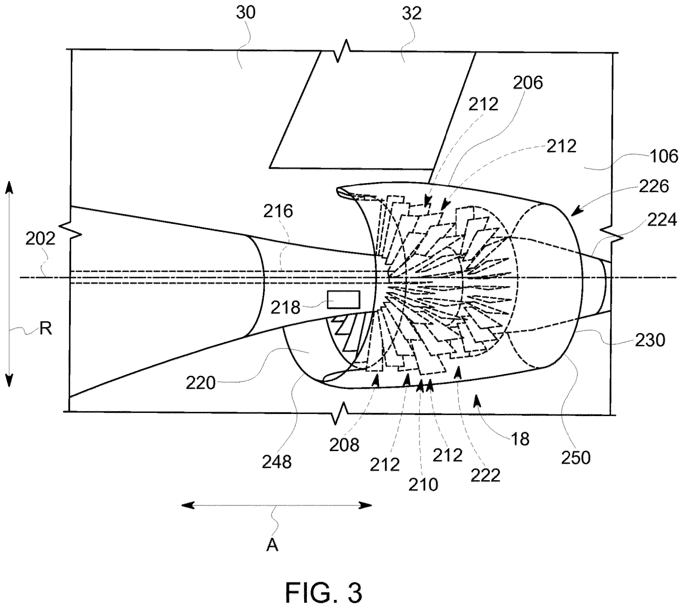

Figure 3 illustrates a cross-sectional perspective view of the BLI fan system 106.

The BLI fan system 106 is mounted to the aircraft 13 near the aft end 18 of the aircraft system 10. The BLI fan system 106 defines a radial direction R and an axial direction A. The axial direction A extends along a longitudinal, axial centerline 202 that extends through a center of the BLI fan system 106 between a forward end 248 and a rear end 250 of an outer nacelle 206. The outer nacelle 206 includes an inlet 220 at the forward end 248 and an outlet 230 at the rear end 250. For example, during cruising operation of the aircraft system 10, boundary layer air may flow into the inlet 220 at the forward end 248 and exit the BLI fan system 106 from the outlet 230 at the rear end 250 of the outer nacelle 206. For example, the outer nacelle 206 defines a passageway through which air is configured to flow.

The aircraft propulsion system 100 (of Figures 1 and 2) also includes an actuator 218 operably coupled with the BLI fan system 106. The actuator 218 may be a motor, a mechanical actuator, a hydraulic actuator, a hydraulic pump, or the like. In the illustrated embodiment, a single actuator 218 is operably coupled with the BLI fan system 106. Additionally or alternatively, the propulsion system 100 may have one or more actuators 218 that are operably coupled with the BLI fan system 106. The actuator 218 is disposed within the fuselage 12 at the aft end 18 of the aircraft system 10. Alternatively, the actuator 218 may be disposed at an alternative location within the aircraft system 10.

The actuator 218 electrically and/or mechanically controls operations of the BLI fan system 106. Additionally, the electric generator 108 and/or the energy storage device 110 are electrically coupled with the actuator 218. For example, the electric generator 108 may provide converted electrical power to the actuator 218. The actuator 218 may control one or more operations of the BLI fan system 106 using the electrical power generated by the electric generator 108 and supplied to the actuator 218.

The BLI fan system 106 includes inlet guide vanes 208 and outlet guide vanes 222. Optionally, in one or more embodiments, the BLI fan system 106 may be devoid of the inlet guide vanes 208 and/or devoid of the outlet guide vanes 222. Additionally or alternatively, the inlet guide vanes 208 may be referred to as inlet guide blades 208, and the outlet guide vanes 222 may be referred to as outlet guide blades 222. For example, the inlet and outlet guide blades 208, 222 may be shaped and sized similar to or unique to the fan blades 212. The inlet guide vanes 208 are fixedly coupled to the outer nacelle 206 and disposed near the forward end 248 of the outer nacelle 206 along the axial centerline 202. The outlet guide vanes 222 are fixedly coupled to the outer nacelle 206 and disposed near the rear end 250 of the outer nacelle 206 along the axial centerline 202. For example, the fan 210 is disposed between the inlet guide vanes 208 and the outlet guide vanes 222. Additionally or alternatively, the inlet and/or outlet guide vanes 208, 222 may be variable guide vanes. One or more of the inlet guide vanes 208 and/or one or more of the outlet guide vanes 222 may be rotatable about a guide vane axis (not shown) corresponding to each inlet guide vanes 208 and/or each outlet guide vanes 222. For example, the actuator 218 may be operably coupled with the inlet and/or outlet guide vanes 208, 222 and may provide electrical or mechanical power in order to rotate the inlet and/or outlet guide vanes 208, 222 from a first pitch angle to a different, second pitch angle. Optionally, a first actuator may be operably coupled with and control the position of the inlet guide vanes 208 and a different, second actuator may be operably coupled with and control the position of the outlet guide vanes 222.

The inlet and outlet guide vanes 208, 222 are shaped, sized, and oriented within the outer nacelle 206 in order to direct and/or condition a flow of air that flows through the BLI fan system 106. For example, the inlet and outlet guide vanes 208, 222 may increase an efficiency of the BLI fan system 106, may reduce distortion of air flowing into the BLI fan system 106, add strength and/or rigidity to the BLI fan system 106, or the like, relative to a BLI fan system 106 that is devoid inlet and/or outlet guide vanes 208, 222.

The BLI fan system 106 includes a fan 210 that includes a rotating fan shaft 216 that is rotatable about the axial centerline 202 within the outer nacelle 206. The BLI fan system 106 includes plural fan blades 212 that are spaced substantially uniform with respect to each other fan blade 212 about the axial centerline 202. In one or more embodiments, the fan blades 212 may be fixedly attached to the fan shaft 216 or may be rotatably attached to the fan shaft 216. For example, the fan blades 212 may be attached to the fan shaft 216 such that a pitch angle of each of the blades 212 may be changed (e.g., in unison or not in unison) by the actuator 218 directing the blades 212 to rotate around or about a blade axis of each of the fan blades 212. In one or more embodiments, the pitch angle of the fan blades 212 may be changed by the actuator 218, by a hydraulic pump (not shown), or an alternative mechanism. Changing the pitch of the plurality of fan blades 212 may increase an efficiency of the BLI fan system 106, may allow the BLI fan system 106 to achieve a desired thrust, or the like, relative to a BLI fan system 106 that does not change the pitch of the fan blades 212. For example, the BLI fan system 106 may be referred to as a variable pitch fan. The pitch angle of the fan blades 212 will be discussed in more detail below.

The fan shaft 216 of the BLI fan system 106 is operably coupled with the electric motor 40 (of Figures 1 and 2). The electric motor 40 may change one or more of the speed of rotation of the fan shaft 216, a direction of rotation of the fan shaft 216 of the fan 210, or the like. Changing a direction and/or speed of rotation of the fan 210 may increase an efficiency of the aircraft propulsion system 100, may increase an efficiency of the BLI fan system 106, may allow the BLI fan system 106 to achieve a desired direction and/or amount of thrust, or the like, relative to a BLI fan system 106 that does not change the speed and/or direction of rotation of the fan 210. The direction of rotation of the fan 210 will be discussed in more detail below.

The BLI fan system 106 includes a tail cone 224 and a nozzle 226. The nozzle 226 is disposed between the outer nacelle 206 and the tail cone 224 at the rear end 250 of the nacelle 206. The tail cone 224 is shaped and sized to direct the flow of air that is flowing through the outlet 230 of the BLI fan system 106. The nozzle 226 generates an amount of thrust from the air that is flowing through the BLI fan system 106, and the tail cone 224 is shaped in order to minimize an amount of drag on the BLI fan system 106. Additionally or alternatively, the tail cone 224 may have any alternative shape and/or size, may be disposed at an alternative position within the BLI fan system 106 (e.g., between the inlet 220 and the outlet 230), or the like.

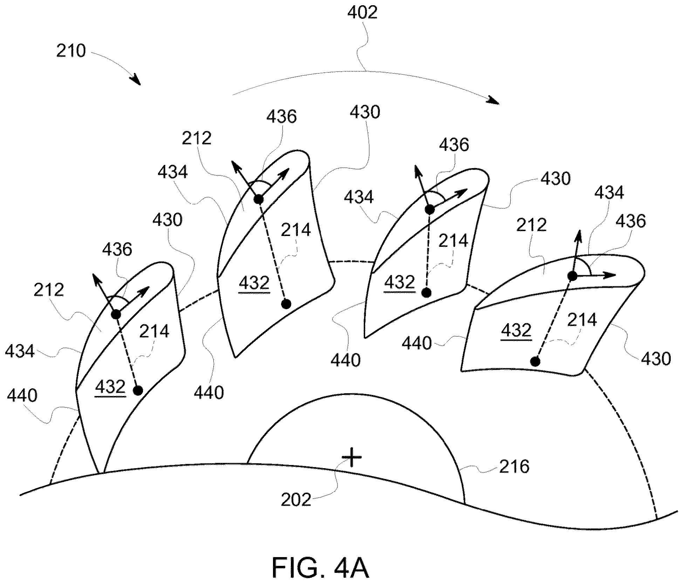

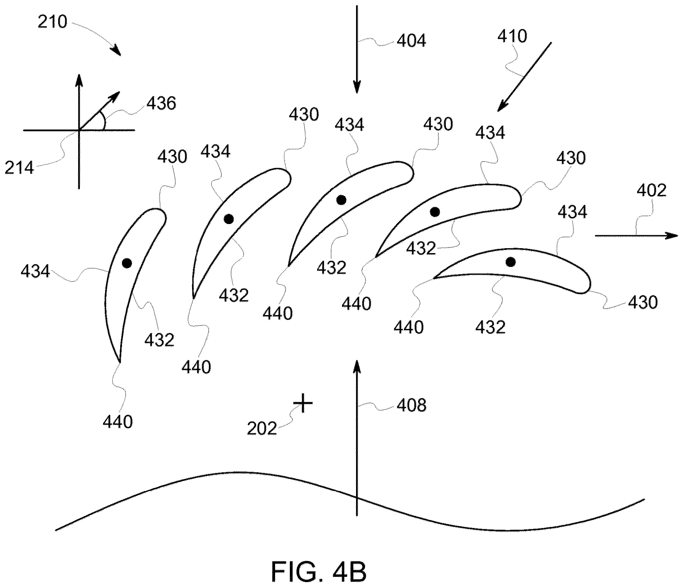

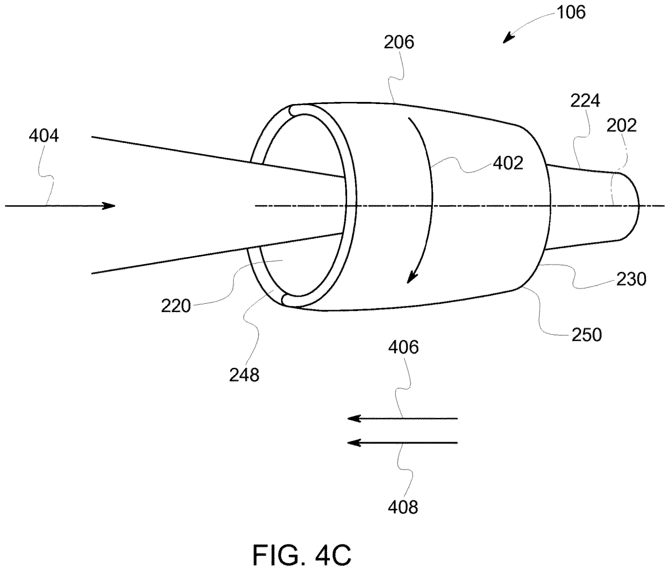

Figure 4A illustrates a partial perspective view of the BLI fan system 106 having the fan blades 212 positioned at a first pitch angle in accordance with one embodiment. Figure 4B illustrates a partial front view of the BLI fan system 106 having the blades 212 positioned at the first pitch angle in accordance with one embodiment. Figure 4C illustrates a side view of the BLI fan system 106. Figures 4A, 4B and 4C will be discussed in detail together.

The fan 210 and the plural fan blades 212 rotate in a first direction of rotation 402 about the axial centerline 202 of the BLI fan system 106. Each of the fan blades 212 has a pressure side 432 and a suction side 434 that is opposite the pressure side 432. The pressure side 432 and the suction side 434 are interconnected by a leading edge 430 and a trailing edge 440 that is opposite the leading edge 430. The pressure side 432 is generally concave in shape, and the suction side 434 is generally convex in shape between the leading and trailing edges 430, 440. For example, the generally concave pressure side 432 and the generally convex suction side 434 provides an aerodynamic surface over which fluid flows through the BLI fan system 106.

The blades 212 in the embodiment of Figures 4A and 4B are positioned at a first pitch angle 436 with respect to a blade axis 214 corresponding to each blade 212. For example, the first pitch angle 436 may be less than 90 degrees from a horizontal axis as illustrated in Figure 4B. For example, the first pitch angle 436 may be defined as the angle between the horizontal axis and a blade chord line.

Air is flowing through the BLI fan system 106 in a first direction of airflow 404 when the blades 212 are positioned in the first pitch angle 436 and when the fan 210 is rotating in a first direction of rotation 402 (e.g., in a clockwise direction illustrated in Figure 4A) around the axial centerline 202 of the BLI fan system 106. The flow of air in the first direction of airflow 404 flows into the inlet 220 at the forward end 248 of the outer nacelle 206 and exits the BLI fan system 106 through the outlet 230 at the rear end 250 of the outer nacelle 206. Additionally, the inlet guide vanes 208 and the outlet guide vanes 222 (illustrated in Figure 3) may be positioned at, respectively, a first inlet pitch angle and a first outlet pitch angle (not shown) when the flow of air is flowing in the first direction of airflow 404 through the BLI fan system 106.

The air flowing in the first direction of airflow 404 flows in a direction from the leading edge 430 of the blade 212 to the trailing edge 440 of each blade 212. For example, a first relative velocity 410 of the airflow that is moving in the first direction of airflow 404 is configured to be directed towards the leading edge 430 of each blade 212.

The fan blades 212 positioned at the first pitch angle 436 and the fan 210 rotating in the first direction of rotation 402 generates forward thrust 408 that propels the aircraft system 10 in the forward direction of movement 406 of the aircraft system 10. For example, during operation of the aircraft system 10 when the aircraft system 10 is cruising and/or accelerating (e.g., during take-off), the BLI fan system 106 provides forward thrust 408 to the aircraft system 10. The BLI fan system 106 assists the jet engines 102, 104 in moving the aircraft system 10 in the direction of travel in the forward direction of movement 406.

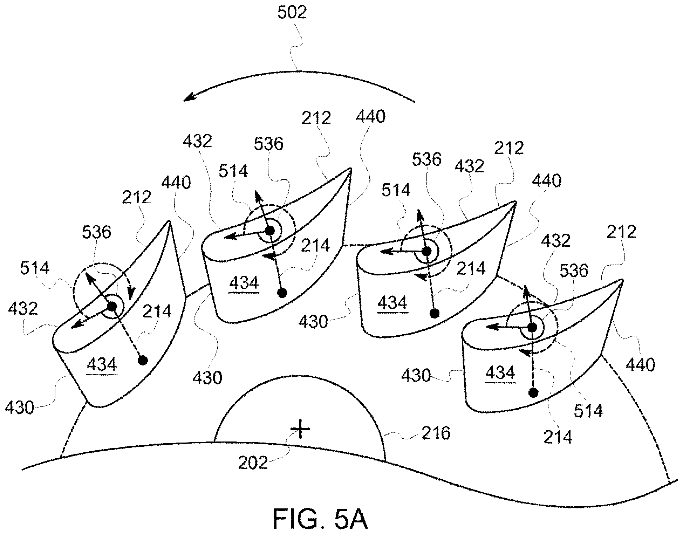

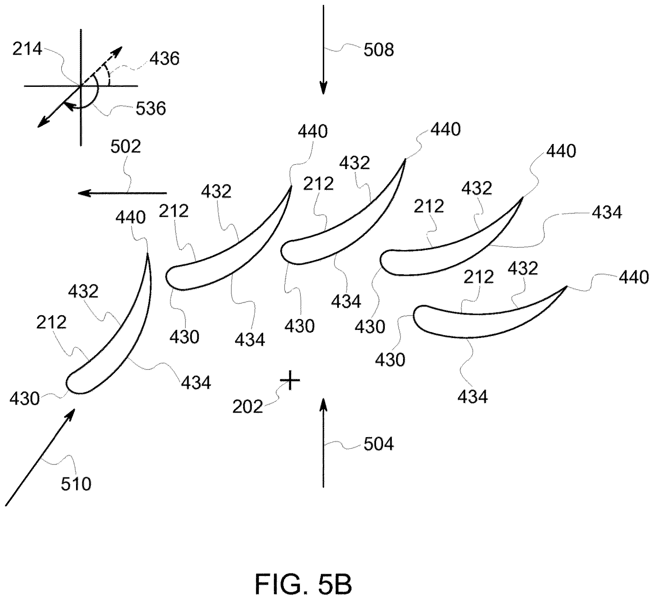

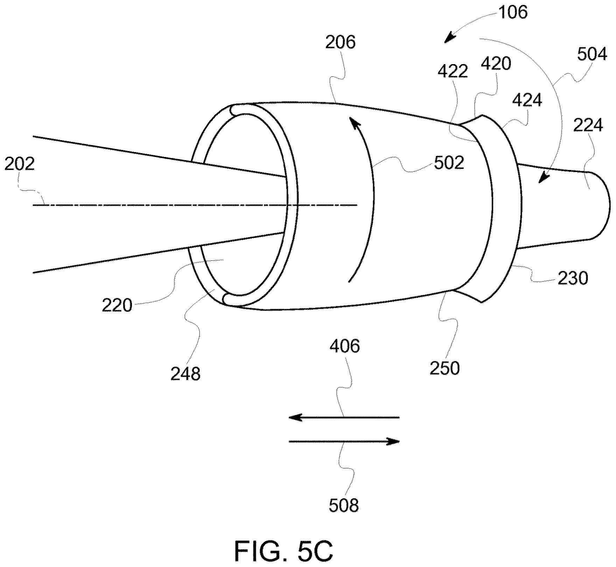

Figures 5A, 5B, and 5C, illustrated a change to the position of the blades 212 and change in the direction of rotation of the fan 210. Figure 5A illustrates a partial perspective view of the BLI fan system 106 having the blades 212 positioned at a different, second pitch angle in accordance with one embodiment. Figure 5B illustrates a partial front view of the BLI fan system 106 having the blades 212 positioned at the second pitch angle in accordance with one embodiment. Figure 5C illustrates a side view of the BLI fan system 106. Figures 5A, 5B and 5C will be discussed in detail together.

The blades 212 in the embodiment of Figures 5A and 5B are positioned at a different, second pitch angle 536 with respect to the blade axis 214 corresponding to each blade 212. The actuator 218 of the aircraft propulsion system 100 may operably control the blades 212 in order to change the position of the pitch angle of the blades 212 from the first pitch angle 436 to the second pitch angle 536. For example, the actuator 218 may include a switch (not shown) or an alternative electrical or mechanical component that electrically or mechanically controls the position of the blades 212. The switch may be manually controlled by an operator onboard the aircraft system 10, by an operator off-board the aircraft system 10, or may be autonomously controlled by one or more systems of the aircraft system 10. Each blade 212 rotates (e.g., a clockwise direction of rotation 514 illustrated in Figure 5A) from the position of the first pitch angle 436 to the position of the second pitch angle 536 about each corresponding blade axis 214. For example, the electric generator 108 (of Figure 1) may convert the mechanical energy from the jet engines 102, 104 to electric energy that is used by the actuator 218 to change the position of the blades 212. Optionally, a hydraulic pump or an alternative mechanism may change the position of the blades 212. Optionally, each blade 212 may rotate in a direction opposite the direction of rotation 514 illustrated in Figure 5A from the position of the first pitch angle 436 to the position of the second pitch angle 536. For example, the blades 212 may rotate in a counter-clockwise direction of rotation.

The electric motor 40 changes the direction of rotation of the fan 210 from the first direction of rotation 402 (e.g., clockwise in Figure 4A) to a different, second direction of rotation 502 (e.g., illustrated as counter-clockwise in Figure 5A) about the axial centerline 202 of the BLI fan system 106. For example, the electric motor 40 may include one or more phase switches (not shown), or alternative electrical components, that may electrically change the direction of rotation of the fan. The phase switch may be manually controlled by an operator onboard the aircraft system 10, by an operator off-board the aircraft system 10, or may be autonomously controlled by one or more systems of the aircraft system 10. Optionally, the electric motor 40 may change the direction of rotation of the fan 210 to the second direction of rotation 502, and may increase and/or decrease a speed of rotation of the fan 210. For example, the electric motor 40 may direct the speed of the fan to decrease (e.g., to a predetermined lower fan speed limit threshold, to a stop, or the like), then change the direction of rotation of the fan to the second direction of rotation 502. Optionally, the direction of rotation of the fan may remain unchanged when the blades 212 are configured to rotate in the counter-clockwise direction (e.g., a direction opposite the direction of rotation 514).

Optionally, in one or more embodiments, the actuator 218 may operably control the inlet guide vanes 208 and/or the outlet guide vanes 222 in order to change the position of the pitch angle of the inlet and/or outlet guide vanes 208, 222 to a different, second pitch angle. For example, the actuator 218 may include one or more switches (not shown) or an alternative electrical component that electrically controls the position of the inlet and/or outlet guide vanes 208, 222. The actuator 218 may change the position of the inlet and outlet guide vanes 208, 222 from a first inlet pitch angle to a different, second inlet pitch angle, and from a first outlet pitch angle to a different, second outlet pitch angle, respectively. For example, the inlet guide vanes 208 may have a first inlet pitch angle that is unique to the first outlet pitch angle of the outlet guide vanes 222 and that is unique to the first pitch angle 436 of the fan blades 212. Additionally, the actuator 218 may change the position of the inlet guide vanes 208 to a second inlet pitch angle that is unique to the second outlet pitch angle of the outlet guide vanes 222 and that is unique to the second pitch angle 536 of the fan blades 212. For example, the actuator 218 may change the position of the inlet guide vanes 208, the outlet guide vanes 222, and the fan blades 212 to unique and/or common positions. Optionally, the propulsion system 100 may include three actuators 218 that operably control the position of the inlet guide vanes 208, the fan blades 212, and the outlet guide vanes 222. For example, a first actuator may be operably coupled with the fan blades 212 in order to change the position of the pitch angle of the fan blades 212, a second actuator may be operably coupled with the inlet guide vanes 208 in order to change the position of the pitch angle of the inlet guide vanes 208, and a third actuator may be operably coupled with the outlet guide vanes 222 in order to change the position of the pitch angle of the outlet guide vanes 222. Additionally or alternatively, the actuator 218 may include three switches. For example, a first switch may be operably coupled with the with the fan blades 212 in order to change the position of the pitch angle of the fan blades 212, a second switch may be operably coupled with the inlet guide vanes 208 in order to change the position of the pitch angle of the inlet guide vanes 208, and a third switch may be operably coupled with the outlet guide vanes 222 in order to change the position of the pitch angle of the outlet guide vanes 222.

Changing the position of the blades 212 of the BLI fan system 106 from the first pitch angle 436 to the second pitch angle 536, and changing the direction of rotation of the fan 210 from the first direction of rotation 402 to the second direction of rotation 502 changes a direction of flow of air through the BLI fan system 106 from the first direction of airflow 404 to a different, second direction of airflow 504. The flow of air in the second direction of airflow 504 flows into the outlet 230 at the rear end 250 of the outer nacelle 206 and exits the BLI fan system 106 through the inlet 220 at the forward end 248 of the outer nacelle 206.

The air flowing in the second direction of airflow 504 flows in a direction from the leading edge 430 of the blade 212 to the trailing edge 440 of each blade 212. For example, a second relative velocity 510 of the airflow that is moving in the second direction of airflow 504 is configured to be directed towards the leading edge 430 of each blade 212.

The fan blades 212 positioned at the second pitch angle 536 and the fan 210 rotating in the second direction of rotation 502 generates reverse thrust 508 that counteracts the propulsion of the aircraft system 10 in the forward direction of movement 406 of the aircraft system 10. For example, during operation of the aircraft system 10 when the aircraft system 10 is landing, the BLI fan system 106 provides reverse thrust 508 to the aircraft system 10. The BLI fan system 106 assists a braking system (not shown) of the aircraft system 10 by slowing, reducing, or stopping the forward direction of movement 406 of the aircraft system 10.

As illustrated in Figure 4C, when the fan 210 is rotating in the first direction of rotation 402, the blades are positioned at the first pitch angle 436, and air is flowing through the BLI fan system 106 in the first direction of airflow 404, the first direction of airflow 404 through the BLI fan system 106 is in an opposite direction as the direction of movement 406 of the aircraft system 10. Alternatively, as illustrated in Figure 5C, when the fan 210 is rotating in the second direction of rotation 502, the blades are positioned at the second pitch angle 536, and air is flowing through the BLI fan system 106 in the second direction of airflow 504, the second direction of airflow 504 through the BLI fan system 106 is in the same direction as the direction of movement 406 of the aircraft system 10. Optionally, the inlet guide vanes 208 and the outlet guide vanes 222 may be positioned at, respectively, a first inlet pitch angle and a first outlet pitch angle (e.g., a first inlet pitch angle that may be the same or different than the first pitch angle 436, and a first outlet pitch angle that may be the same or different than the first pitch angle 436) when the flow of air is flowing in the first direction of airflow 404 through the BLI fan system 106, and the inlet and outlet guide vanes 208, 222 may be positioned at, respectively, a different, second inlet pitch angle and different, second outlet pitch angle (e.g., a second inlet pitch angle that may be the same or different than the second pitch angle 536, and a second outlet pitch angle that may be the same or different than the second pitch angle 536) when the flow of air is flowing in the second direction of airflow 504 through the BLI fan system 106.

The BLI fan system 106 includes a flare 420 that is disposed at the rear end 250 of the outer nacelle 206. The flare 420 extends around a perimeter of the outer nacelle 206. The flare 420 is shaped and sized in order to direct the flow of air flowing in the second direction of airflow 504 into the outlet 230 of the BLI fan system 106. For example, the flare 420 includes an inner flare surface 422 that is disposed near the outlet 230 of the outer nacelle 206, and an outer flare surface 424 that is disposed distal to the outer nacelle 206 relative to the inner flare surface 422. The outer flare surface 424 has a diameter that is larger than a diameter of the inner flare surface 422. For example, the flare 420 may direct non-boundary layer air into the outlet 230 of the BLI fan system 106 when the BLI fan system 106 is providing reverse thrust (e.g., reverse thrust 508) to the aircraft system 10.

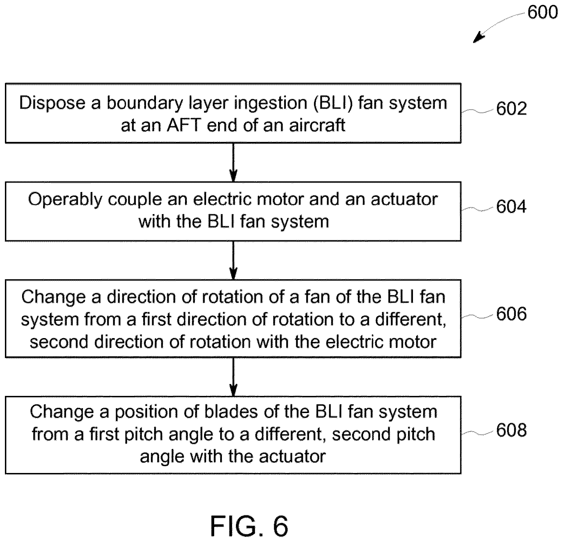

Figure 6 illustrates a flowchart of a method 600 for providing a propulsion system of an aircraft. At 602, a boundary layer ingestion (BLI) fan system (e.g., BLI fan system 106) is disposed at an aft end of an aircraft system. The BLI fan system includes a fan 210 that includes plural blades 212. The fan 210 with blades 212 rotate about an axial centerline 202 of the BLI fan system 106. The BLI fan system 106 consumes or ingests boundary layer air of the aircraft system 10. Additionally or alternatively, the BLI fan system 106 may be disposed at an alternative location of an aircraft system and may consume or ingest freestream air or air that has not been distorted by a fuselage, wings, or the like, of the aircraft system. The BLI fan system 106 provides forward and reverse thrust to the aircraft system 10. For example, the BLI fan system 106 may provide forward thrust (e.g., forward thrust 408 of Figure 4C) to the aircraft system 10 when the aircraft system 10 is taking off, cruising, or accelerating, or the like, and the BLI fan system 106 may provide reverse thrust (e.g., reverse thrust 508 of Figure 5C) to the aircraft system 10 when the aircraft system 10 is landing, decelerating, or the like.

At 604, an electric motor 40 is operably coupled with the BLI fan system 106. For example, the electric motor 40 may be disposed at a position within the fuselage 12 of the aircraft system 10, and may be electrically coupled with the BLI fan system 106. Additionally, an actuator 218 is operably coupled with the BLI fan system 106. For example, the actuator 218 may be disposed at a position within the fuselage 12 of the aircraft system 10, and may be electrically coupled with the BLI fan system 106. In one or more embodiments, the electric motor 40 and the actuator 218 may receive electrical energy from an electric generator 108, from an energy storage device 110, or the like. For example, the electric generator 108 may convert mechanical energy from the jet engines 102, 104 into electrical energy that may be utilized by the electric motor 40 and/or the actuator 218. Optionally, the electric motor 40 and/or the actuator 218 may receive electrical energy from any alternative power source such as an electric battery or the like. Additionally or alternatively, an electric battery may provide power to the aircraft during take-off, may provide power to the electric motor, or the like. In one or more embodiments, the propulsion system 100 may include numerous electric motors 40, actuators 218, hydraulic pumps, or any alternative power source, operably coupled with the BLI fan system 106.

At 606, the electric motor 40 changes a direction of rotation of the fan 210 from the first direction of rotation 402 to the different, second direction of rotation 502. For example, the electric motor 40 may include a phase switch, or any alternative component that may change the direction of rotation of the fan 210. The electric motor 40 controls the direction of rotation of the fan 210. For example, the electric motor 40 may reduce the speed of the rotation of the fan 210 as the fan 210 rotates in the first direction of rotation 402 until the speed of the rotation of the fan 210 has reached a predetermined threshold, has come to a stop, or the like. The phase switch changes a phase of the electric motor 40 in order to change the direction of rotation of the fan 210 to the second direction of rotation 502. The electric motor 40 may increase or decrease the speed of the rotation of the fan 210 rotating in the first direction or rotation 402 or the second direction of rotation 502 until the speed of the rotation of the fan 210 has reached a desired operating speed. The fan 210 rotating in the first direction of rotation 402 provides forward thrust 408 to the aircraft system 10. The fan 210 rotating in the second direction of rotation 502 provides reverse thrust 508 to the aircraft system 10.

At 608, the actuator 218 changes a position of the blades 212 of the BLI fan system 106 from the first pitch angle 436 to the different, second pitch angle 536. For example, the actuator 218 directs the blades 212 to rotate to the second pitch angle 536 position about the corresponding blade axis 214 of each blade 212. Optionally, the position of the blades 212 of the BLI fan system 106 may change from the first pitch angle 436 to and/or from the second pitch angle 536 by mechanical actuators, hydraulic actuators, or the like. The blades 212 positioned in the first pitch angle 436 provides forward thrust 408 to the aircraft system 10. The blades 212 positioned in the second pitch angle 536 provides reverse thrust 508 to the aircraft system 10.

Optionally, the actuator 218 may change a position of the inlet guide vanes 208 and/or the outlet guide vanes 222. For example, the actuator 218 may change a position of the inlet guide vanes 208 from a first inlet pitch angle to the different, second inlet pitch angle by directing the inlet guide vanes 208 to rotate to the second inlet pitch angle about a corresponding vane axis (not shown) of each inlet guide vane 208. Additionally, the actuator 218 may change a position of the outlet guide from a first outlet pitch angle to the different, second outlet pitch angle by directing the outlet guide vanes 222 to rotate to the second outlet pitch angle about a corresponding vane axis (not shown) of each outlet guide vane 222.

In one or more embodiments, the electric motor 40 may change one or more of the direction or speed of rotation of the fan 210 from the first direction of rotation 402 to the second direction of rotation 502, but the actuator 218 may not change the position of the blades 212. Additionally or alternatively, the actuator 218 may change the position of the blades 212 from the first pitch angle 436 to the second pitch angle 536, but the electric motor 40 may not change the direction and/or speed of rotation of the fan 210. Optionally, in one or more embodiments, the pitch angle of the outlet guide vanes and/or the inlet guide vanes may be changed to/from a forward thrust mode of operation to a reverse thrust mode of operation. Optionally, the propulsion system 100 may include multiple BLI fan systems 106. For example, the multiple BLI fan systems 106 may control different components or systems in order to work together to provide forward thrust or reverse thrust for the aircraft system 10. One or more of the multiple BLI fan systems 106 may change one or more of the direction of rotation of the fan 210 or the position of the blades 212. For example, a first BLI fan system 106 may change only the direction of rotation and the speed of rotation of the fan 210, and a second BLI fan system 106 may change the position of the blades 212. Optionally, the one or more BLI fan system 106 may have any uniform or unique combination of changes to the rotation of the fan 210 and/or the position of the blades 212.

In the illustrated embodiments, the propulsion system 100 is used to provide propulsion to an aircraft system. Additionally or alternatively, the propulsion system 100 may be used to provide propulsion to any alternative system, non-limiting examples include water systems, vehicle systems, clean energy systems, or the like.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the subject matter set forth herein.

While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims.

In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims.

## Claims

1. An aircraft propulsion system (100) comprising:
a boundary layer ingestion, BLI, fan system (106) configured to be disposed at an aft end (18) of an aircraft (13), the BLI fan system (106) comprising a fan (210) within an outer nacelle (206), the fan (210) configured to rotate about an axial centerline (202) of the BLI fan system (106) in a first direction of rotation (402), the BLI fan system (106) comprising blades (212) positioned at a first pitch angle (436) configured to rotate with the fan (210);
an electric motor (40) operably coupled with the BLI fan system (106) and configured to change a direction of rotation of the fan (210) to a different, second direction of rotation (502); and
an actuator (218) operably coupled with the BLI fan system (106) and configured to change a position of the blades (212) of the fan (210) to be positioned at a different, second pitch angle (536);
**characterised by** a flare (420) disposed at a rear end (250) of the BLI fan system (106) and extending around a perimeter of the outer nacelle, wherein the flare (420) is configured to direct airflow into the BLI fan system (106).

2. The aircraft propulsion system (100) of claim 1, wherein a direction of airflow configured to flow through the BLI fan system (106) is in a first direction (404) when the fan (210) is rotating in the first direction of rotation (402) and when the blades (212) are positioned at the first pitch angle (436), and wherein the direction of airflow configured to flow through the BLI fan system (106) is in a different, second direction (504) when the fan (210) is rotating in the second direction of rotation (502) and when the blades (212) are positioned at the second pitch angle (536).

3. The aircraft propulsion system (100) of claim 1 or 2, wherein each blade (212) comprises a leading edge (430) and a trailing edge (440), wherein air is configured to flow through the BLI fan system (106) in a direction from the leading edge (430) towards the trailing edge (440).

4. The aircraft propulsion system (100) of claim 1, 2 or 3, wherein the electric motor (40) comprises a phase switch, wherein the phase switch is configured to change the direction of rotation of the fan (210).

5. The aircraft propulsion system (100) of any preceding claim, further comprising a pair of jet engines (102, 104) configured to be suspended beneath wings (20) of the aircraft propulsion system (100), and further comprising an electric generator (108) electrically coupled with the jet engines (102, 104), the electric motor (40), and the actuator (218), wherein the electric generator (108) is configured to convert rotational energy from the jet engines (102, 104) to electrical energy.

6. The aircraft propulsion system (100) of any preceding claim, wherein the BLI fan system (106) is configured to provide thrust (408, 508) to the aircraft propulsion system (100).

7. The aircraft propulsion system (100) of any preceding claim, wherein the thrust provided by the BLI fan system (106) is configured to be one or more of forward thrust (408) or reverse thrust (508).

8. The aircraft propulsion system (100) of any preceding claim, wherein the electric motor (40) is configured to change a speed of rotation of the fan (210).

9. The aircraft propulsion system (100) of any preceding claim, wherein a movement of the aircraft (13) and a direction of airflow configured to flow through the BLI fan system (106) are in the same direction when the fan (210) is rotating in the second direction of rotation (502) and when the blades (212) are positioned at the second pitch angle (536).

10. A method (600) comprising:
disposing a boundary layer ingestion, BLI, fan system (106) at an aft end (18) of an aircraft (13) of an aircraft propulsion system (100), the BLI fan system (106) comprising a fan (210) within an outer nacelle (206), the fan (210) configured to rotate about an axial centerline (202) of the BLI fan system (106) in a first direction of rotation (402), the BLI fan system (106) comprising blades (212) positioned at a first pitch angle (436) configured to rotate with the fan (210), **characterised in that** the BLI fan system (106) includes a flare (420) disposed at a rear end (250) of the BLI fan system (106) and extending around a perimeter of the outer nacelle (206), wherein the flare (420) is configured to direct airflow into the BLI fan system (106);
changing a direction of rotation of the fan (210) to a different, second direction of rotation (502) with an electric motor (40) that is operably coupled with the BLI fan system (106); and
changing a position of the blades (212) of the fan (210) to be positioned at a different, second pitch angle (536) with an actuator (218) that is operably coupled with the BLI fan system (106).

11. The method (600) of claim 10, wherein a direction of airflow configured to flow through the BLI fan system (106) is in a first direction (404) when the fan (210) is rotating in the first direction of rotation (402) and when the blades (212) are positioned at the first pitch angle (436), and wherein the direction of airflow configured to flow through the BLI fan system (106) is in a different, second direction (504) when the fan (210) is rotating in the second direction of rotation (502) and when the blades (212) are positioned at the second pitch angle (536).

12. The method (600) of claim 10 or 11, further comprising suspending a pair of jet engines (102, 104) beneath wings (20) of the aircraft propulsion system (100), and electrically coupling an electric generator (108) with the jet engines (102, 104), the electric motor (40), and the actuator (218), wherein the electric generator (108) is configured to convert rotational energy from the jet engines (102, 104) to electrical energy.

13. The method (600) of claim 10, 11 or 12, wherein a movement of the aircraft (13) and a direction of airflow configured to flow through the BLI fan system (106) are in the same direction when the fan (210) is rotating in the second direction of rotation (502) and when the blades (212) are positioned at the second pitch angle (536).

## Patentansprüche

1. Luftfahrzeugantriebssystem (100), umfassend:
ein Grenzschichteinsaugungs-Fan-System, BLI-Fan-System, (106), das konfiguriert ist, um an einem hinteren Ende (18) eines Luftfahrzeugs (13) angeordnet zu werden, das BLI-Fan-System (106) umfassend einen Fan (210) innerhalb einer äußeren Gondel (206), wobei der Fan (210) konfiguriert ist, um sich um eine axiale Mittellinie (202) des BLI-Fan-Systems (106) herum in einer ersten Drehrichtung (402) zu drehen, das BLI-Fan-System (106) umfassend Blätter (212), die in einem ersten Anstellwinkel (436) positioniert sind, die konfiguriert sind, um sich mit dem Fan (210) zu drehen;
einen Elektromotor (40), der mit dem BLI-Fan-System (106) betriebsfähig gekoppelt und konfiguriert ist, um eine Drehrichtung des Fans (210) in eine andere, zweite Drehrichtung (502) zu ändern; und
einen Aktuator (218), der mit dem BLI-Fan-System (106) betriebsfähig gekoppelt und konfiguriert ist, um eine Position der Blätter (212) des Fans (210) zu ändern, um in einem anderen, zweiten Anstellwinkel (536) positioniert sein;
**gekennzeichnet durch** eine Aufweitung (420), die an einem rückseitigen Ende (250) des BLI-Fan-Systems (106) angeordnet ist und sich um einen Umfang der äußeren Gondel herum erstreckt, wobei die Aufweitung (420) konfiguriert ist, um einen Luftstrom in das BLI-Fan-System (106) zu leiten.

2. Luftfahrzeugantriebssystem (100) nach Anspruch 1, wobei sich eine Richtung des Luftstroms, der konfiguriert ist, um über das BLI-Fan-System (106) zu strömen, in einer ersten Richtung (404) befindet, wenn sich der Fan (210) in der ersten Drehrichtung (402) dreht und wenn die Blätter (212) in dem ersten Anstellwinkel (436) positioniert sind, und wobei sich die Richtung des Luftstroms, der konfiguriert ist, um über das BLI-Fan-System (106) zu strömen, in einer anderen, zweiten Richtung (504) befindet, wenn sich der Fan (210) in der zweiten Drehrichtung (502) dreht und wenn die Blätter (212) in dem zweiten Anstellwinkel (536) positioniert sind.

3. Luftfahrzeugantriebssystem (100) nach Anspruch 1 oder 2, wobei jedes Blatt (212) eine Vorderkante (430) und eine Hinterkante (440) umfasst, wobei Luft konfiguriert ist, um über das BLI-Fan-System (106) in einer Richtung von der Vorderkante (430) zu der Hinterkante (440) hin zu strömen.

4. Luftfahrzeugantriebssystem (100) nach Anspruch 1, 2 oder 3, wobei der Elektromotor (40) einen Phasenschalter umfasst, wobei der Phasenschalter konfiguriert ist, um die Drehrichtung des Fans (210) zu ändern.

5. Luftfahrzeugantriebssystem (100) nach einem der vorstehenden Ansprüche, ferner umfassend ein Paar Strahltriebwerke (102, 104), die konfiguriert sind, um unter den Flügeln (20) des Luftfahrzeugantriebssystems (100) aufgehängt zu werden, und ferner umfassend einen elektrischen Generator (108), der mit den Strahltriebwerken (102, 104), dem Elektromotor (40) und dem Aktuator (218) elektrisch gekoppelt ist, wobei der elektrische Generator (108) konfiguriert ist, um Drehenergie von den Strahltriebwerken (102, 104) in elektrische Energie umzuwandeln.

6. Luftfahrzeugantriebssystem (100) nach einem der vorstehenden Ansprüche, wobei das BLI-Fan-System (106) konfiguriert ist, um dem Luftfahrzeugantriebssystem (100) Schub (408, 508) bereitzustellen.

7. Luftfahrzeugantriebssystem (100) nach einem der vorstehenden Ansprüche, wobei der Schub, der durch das BLI-Fan-System (106) bereitgestellt wird, konfiguriert ist, um einer oder mehrere von einem Vorwärtsschub (408) oder einem Rückwärtsschub (508) zu sein.

8. Luftfahrzeugantriebssystem (100) nach einem der vorstehenden Ansprüche, wobei der Elektromotor (40) konfiguriert ist, um eine Drehgeschwindigkeit des Fans (210) zu ändern.

9. Luftfahrzeugantriebssystem (100) nach einem der vorstehenden Ansprüche, wobei sich eine Bewegung des Luftfahrzeugs (13) und eine Richtung des Luftstroms, der konfiguriert ist, um über das BLI-Fan-System (106) zu strömen, in der gleichen Richtung befinden, wenn sich der Fan (210) in der zweiten Drehrichtung (502) dreht und wenn die Blätter (212) in dem zweiten Anstellwinkel (536) positioniert sind.

10. Verfahren (600), umfassend:
Anordnen eines Grenzschichteinsaugungs-Fan-Systems, BLI-Fan-System, (106) an einem hinteren Ende (18) eines Luftfahrzeugs (13) eines Luftfahrzeugantriebssystems (100), das BLI-Fan-System (106) umfassend einen Fan (210) innerhalb einer äußeren Gondel (206), wobei der Fan (210) konfiguriert ist, um sich um eine axiale Mittellinie (202) des BLI-Fan-Systems (106) herum in einer ersten Drehrichtung (402) zu drehen, das BLI-Fan-System (106) umfassend Blätter (212), die in einem ersten Anstellwinkel (436) positioniert sind, die konfiguriert sind, um sich mit dem Fan (210) zu drehen,
**dadurch gekennzeichnet, dass**
das BLI-Fan-System (106) eine Aufweitung (420) einschließt, die an einem rückseitigen Ende (250) des BLI-Fan-Systems (106) angeordnet ist und sich um einen Umfang der äußeren Gondel (206) herum erstreckt, wobei die Aufweitung (420) konfiguriert ist, um den Luftstrom in das BLI-Fan-System (106) zu leiten;
Ändern einer Drehrichtung des Fans (210) in eine andere, zweite Drehrichtung (502) mit einem Elektromotor (40), der mit dem BLI-Fan-System (106) betriebsfähig gekoppelt ist; und
Ändern einer Position der Blätter (212) des Fans (210), um in einem anderen, zweiten Anstellwinkel (536) positioniert zu sein, mit einem Aktuator (218), der mit dem BLI-Fan-System (106) betriebsfähig gekoppelt ist.

11. Verfahren (600) nach Anspruch 10, wobei sich eine Richtung des Luftstroms, der konfiguriert ist, um über das BLI-Fan-System (106) zu strömen, in einer ersten Richtung (404) befindet, wenn sich der Fan (210) in der ersten Drehrichtung (402) dreht und wenn die Blätter (212) in dem ersten Anstellwinkel (436) positioniert sind, und wobei sich die Richtung des Luftstroms, der konfiguriert ist, um über das BLI-Fan-System (106) zu strömen, in einer anderen, zweiten Richtung (504) befindet, wenn sich der Fan (210) in der zweiten Drehrichtung (502) dreht und wenn die Blätter (212) in dem zweiten Anstellwinkel (536) positioniert sind.

12. Verfahren (600) nach Anspruch 10 oder 11, ferner umfassend ein Aufhängen eines Paars Strahltriebwerke (102, 104) unter den Flügeln (20) des Luftfahrzeugantriebssystems (100), und ein elektrisches Koppeln eines elektrischen Generators (108) mit den Strahltriebwerken (102, 104), dem Elektromotor (40) und dem Aktuator (218), wobei der elektrische Generator (108) konfiguriert ist, um Drehenergie von den Strahltriebwerken (102, 104) in elektrische Energie umzuwandeln.

13. Verfahren (600) nach Anspruch 10, 11 oder 12, wobei sich eine Bewegung des Luftfahrzeugs (13) und eine Richtung des Luftstroms, der konfiguriert ist, um über das BLI-Fan-System (106) zu strömen, in der gleichen Richtung befinden, wenn sich der Fan (210) in der zweiten Drehrichtung (502) dreht und wenn die Blätter (212) in dem zweiten Anstellwinkel (536) positioniert sind.

## Revendications

1. Système de propulsion d'aéronef (100), comprenant :
un système de ventilateur d'ingestion de couche limite, BLI, (106) conçu pour être disposé à l'extrémité arrière (18) d'un aéronef (13), le système de ventilateur BLI (106) comprenant un ventilateur (210) à l'intérieur d'une nacelle extérieure (206), le ventilateur (210) conçu pour tourner autour d'une ligne centrale axiale (202) du système de ventilateur BLI (106) dans un premier sens de rotation (402), le système de ventilateur BLI (106) comprenant des pales (212) positionnées à un premier angle de tangage (436) conçues pour tourner avec le ventilateur (210) ;
un moteur électrique (40) couplé de manière opérationnelle au système de ventilation BLI (106) et conçu pour changer un sens de rotation du ventilateur (210) en un second sens de rotation différent (502) ; et
un actionneur (218) couplé de manière opérationnelle au système de ventilateur BLI (106) et conçu pour modifier une position des pales (212) du ventilateur (210) afin de les positionner à un second angle de tangage (536) différent ;
**caractérisé par** un évasement (420) disposé à une extrémité arrière (250) du système de ventilateur BLI (106) et s'étendant autour d'un périmètre de la nacelle extérieure, dans lequel l'évasement (420) est conçu pour diriger le flux d'air dans le système de ventilateur BLI (106).

2. Système de propulsion d'aéronef (100) selon la revendication 1, dans lequel une direction de flux d'air conçue pour circuler à travers le système de ventilateur BLI (106) est dans une première direction (404) lorsque le ventilateur (210) tourne dans le premier sens de rotation (402) et lorsque les pales (212) sont positionnées au premier angle de tangage (436), et dans lequel la direction du flux d'air conçu pour circuler à travers le système de ventilateur BLI (106) est dans une seconde direction différente (504) lorsque le ventilateur (210) tourne dans le second sens de rotation (502) et lorsque les pales (212) sont positionnées au second angle de tangage (536).

3. Système de propulsion d'aéronef (100) selon la revendication 1 ou 2, dans lequel chaque pale (212) comprend un bord d'attaque (430) et un bord de fuite (440), dans lequel l'air est conçu pour circuler à travers le système de ventilateur BLI (106) dans une direction allant du bord d'attaque (430) vers le bord de fuite (440).

4. Système de propulsion d'aéronef (100) selon la revendication 1, 2 ou 3, dans lequel le moteur électrique (40) comprend un commutateur de phase, dans lequel le commutateur de phase est conçu pour changer le sens de rotation du ventilateur (210).

5. Système de propulsion d'aéronef (100) selon l'une quelconque revendication précédente, comprenant en outre une paire de moteurs à réaction (102, 104) conçus pour être suspendus sous les ailes (20) du système de propulsion d'aéronef (100), et comprenant en outre un générateur électrique (108) électriquement couplé aux moteurs à réaction (102, 104), au moteur électrique (40), et à l'actionneur (218), dans lequel le générateur électrique (108) est configuré pour convertir l'énergie de rotation des moteurs à réaction (102, 104) en énergie électrique.

6. Système de propulsion d'aéronef (100) selon l'une quelconque revendication précédente, dans lequel le système de ventilateur BLI (106) est conçu pour fournir une poussée (408, 508) au système de propulsion d'aéronef (100).

7. Système de propulsion d'aéronef (100) selon l'une quelconque revendication précédente, dans lequel la poussée fournie par le système de ventilateur BLI (106) est conçue pour être une ou plusieurs poussées vers l'avant (408) ou vers l'arrière (508).

8. Système de propulsion d'aéronef (100) selon l'une quelconque revendication précédente, dans lequel le moteur électrique (40) est configuré pour modifier la vitesse de rotation du ventilateur (210).

9. Système de propulsion d'aéronef (100) selon l'une quelconque revendication précédente, dans lequel un mouvement de l'aéronef (13) et une direction du flux d'air conçu pour circuler à travers le système de ventilateur BLI (106) sont dans la même direction lorsque le ventilateur (210) tourne dans le second sens de rotation (502) et lorsque les pales (212) sont positionnées au second angle de tangage (536).

10. Procédé (600) comprenant :
la disposition d'un système de ventilateur d'ingestion de couche limite, BLI, (106) à une extrémité arrière (18) d'un aéronef (13) d'un système de propulsion d'aéronef (100), le système de ventilateur BLI (106) comprenant un ventilateur (210) à l'intérieur d'une nacelle extérieure (206), le ventilateur (210) conçu pour tourner autour d'un axe central axial (202) du système de ventilateur BLI (106) dans un premier sens de rotation (402), le système de ventilateur BLI (106) comprenant des pales (212) positionnées à un premier angle de tangage (436) conçues pour tourner avec le ventilateur (210),
**caractérisé en ce que**
le système de ventilateur BLI (106) comporte un évasement (420) disposé à l'extrémité arrière (250) du système de ventilateur BLI (106) et s'étendant autour d'un périmètre de la nacelle extérieure (206), dans lequel l'évasement (420) est conçu pour diriger le flux d'air dans le système de ventilateur BLI (106) ;
le changement du sens de rotation du ventilateur (210) en un second sens de rotation (502) à l'aide d'un moteur électrique (40) couplé de manière opérationnelle au système de ventilation BLI (106) ; et
la modification d'une position des pales (212) du ventilateur (210) pour qu'elles soient positionnées à un second angle de tangage (536) différent à l'aide d'un actionneur (218) couplé de manière opérationnelle au système de ventilateur BLI (106).

11. Procédé (600) selon la revendication 10, dans lequel une direction de flux d'air conçue pour circuler à travers le système de ventilateur BLI (106) est dans une première direction (404) lorsque le ventilateur (210) tourne dans le premier sens de rotation (402) et lorsque les pales (212) sont positionnées au premier angle de tangage (436), et dans lequel la direction du flux d'air conçu pour circuler à travers le système de ventilateur BLI (106) est dans une seconde direction différente (504) lorsque le ventilateur (210) tourne dans le second sens de rotation (502) et lorsque les pales (212) sont positionnées au second angle de tangage (536).

12. Procédé (600) selon la revendication 10 ou 11, comprenant en outre la suspension d'une paire de moteurs à réaction (102, 104) sous les ailes (20) du système de propulsion d'aéronef (100), et le couplage électrique d'un générateur électrique (108) avec les moteurs à réaction (102, 104), le moteur électrique (40), et l'actionneur (218), dans lequel le générateur électrique (108) est configuré pour convertir l'énergie de rotation des moteurs à réaction (102, 104) en énergie électrique.

13. Procédé (600) selon la revendication 10, 11 ou 12, dans lequel un mouvement de l'aéronef (13) et une direction du flux d'air conçu pour circuler à travers le système de ventilateur BLI (106) sont dans la même direction lorsque le ventilateur (210) tourne dans le second sens de rotation (502) et lorsque les pales (212) sont positionnées au second angle de tangage (536).
